Europäisches Patentamt

European Patent Office

Office européen des brevets

(19)

(11) Publication number: **0 045 764**
B1

(12) **EUROPEAN PATENT SPECIFICATION**

(45) Date of publication of patent specification: **09.05.84**

(51) Int. Cl.³: **B 29 C 27/04, B 23 K 13/00**

(21) Application number: **81900440.9**

(22) Date of filing: **25.02.81**

(86) International application number:
**PCT/GB81/00027**

(87) International publication number:
**WO 81/02405 03.09.81 Gazette 81/21**

(54) **METHOD FOR INTERCONNECTING PIPES.**

(30) Priority: **25.02.80 GB 8006263**

(43) Date of publication of application:
**17.02.82 Bulletin 82/7**

(45) Publication of the grant of the patent:
**09.05.84 Bulletin 84/19**

(84) Designated Contracting States:
**AT DE FR GB NL SE**

(56) References cited:
**WO - A - 80/02124**
**FR - A - 1 244 868**
**US - A - 3 954 541**

(73) Proprietor: **BRICKHOUSE DUDLEY PLC**
**102 Dudley Road West**
**Tipton West Midlands DY4 7XD (GB)**

(72) Inventor: **RICE, Nigel Leonard**
**Epworth Grange Beltoft Road Epworth Nr.**
**Doncaster**
**South Yorkshire (GB)**

(74) Representative: **Geldard, David Guthrie et al,**
**URQUHART-DYKES AND LORD 11th Floor, Tower**
**House Merrion Way**
**Leeds, LS2 8PB West Yorkshire (GB)**

Courier Press, Leamington Spa, England.

## Description

This invention relates to a method for interconnecting pipes and in particular for forming a lateral connection between a service pipe and a mains pipe.

Faulty sewerage systems may be relined by the insertion of plastic pipelines. In order to avoid digging to the full depth of the sewerage main to connect the service pipe or lateral, the point of entry can be determined from the surface and a hole drilled through which the service pipe can then be fed.

This invention is concerned with a method for permanently fixing the service pipe to the mains pipe to form a pressure-tight joint.

According to the present invention there is provided a method for forming a lateral connection between a first thermoplastics pipe and a second thermoplastics pipe, the method comprising introducing the end of the second pipe into a hole in the first pipe, said end of the second pipe carrying or incorporating electrically conducting element(s), the second pipe being provided with means for inducing a current in said electrically conducting element(s), the current being such as to heat the element(s) thereby causing melting of the material of the first and/or second pipe in the vicinity of said hole so effecting a fused joint between the first and second pipe.

The electrically conducting elements may have a Curie point selected to be within the range of fusion temperature which is applicable for the pipes being joined together, for example a Curie point lying in the range from 200 to 300°C.

The pipes to be joined together may be made of polyethylene and the Curie point of the conductive material may then be in the range of from 230 to 280°C, preferably from 250 to 270°C. Alternatively the pipes to be joined together may be made of polypropylene and the Curie point of the conductive material may then lie in the range 250 to 300°C, preferably from 260 to 290°C.

In further embodiments the electrically conducting elements may be in the form of one or more perforated strips of metal, or may include a metal ring coated with polymeric material chosen so as to be capable of effecting a good bond to both the ring and the material of one of both pipes to be joined together.

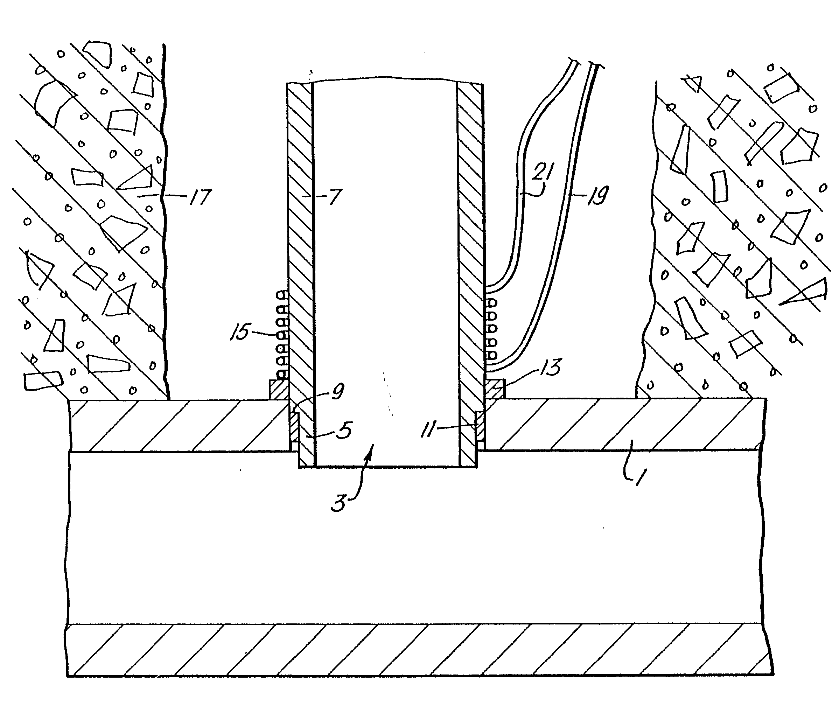

An embodiment of the present invention will now be described, by way of example only, and with reference to the accompanying drawing which illustrates in diagrammatic sectional form a method of the invention.

Referring to the drawing, a mains pipe 1 has a circular hole 3 into which is positioned the end 5 of service pipe 7. The exterior surface of end 5 of surface pipe 7 is rebated to provide a shoulder 9 against which is fitted a ring 11 which is formed of a material called Radiometal which is an alloy manufactured by Telcon. Ring 11 is coated with a polymeric material chosen so as to be capable of effecting a good bond to the ring 11 as well as to the material of the plastics pipe 7.

An annular or part-annular depth stop 13 is fitted around the exterior surface of pipe 7 a short distance above shoulder 9. Abutting the upper surface of depth stop 13 and extending upwardly therefrom is a coil 15.

In order to arrive at the position shown in the drawing, a hole is first dug through ground 17 until the surface of mains pipe 1 is revealed. Hole 3 is then cut in mains pipe 1. Service pipe 7, carrying ring 11, depth stop 13 and coil 15, is then fed down to mains pipe 1 and inserted into hole 3 up to depth stop 13. Wires 19 and 21 extend from coil 15 to the surface. Wires 19 and 21 are connected to an R.F. generator and power is supplied to coil 15. A current is induced in ring 11, causing the temperature of the ring to increase. This in turn causes the melting and flow of the polymer surrounding ring 11 thereby effecting a fused joint between the end 5 of service pipe 7 and the mains pipe 1.

Reference is made to our spec. No. 80/02124 which represents the nearest prior art known modification to the applicant and which forms part of the state of the art by virtue, of Art. 54(3), the present invention being a particular modification of the method described in the earlier application.

## Claims

1. A method for forming a lateral connection between a first thermoplastics pipe (1) and a second thermoplastics pipe (7) comprising introducing the end (5) of the second pipe (7) into a hole (3) in the first pipe (1), said end (5) of the second pipe (7) carrying or incorporating electrically conducting element(s) (11), the second pipe (7) being provided with means (15) for inducing a current in said electrically conducting element(s) (11), the current being such as to heat the element(s) (11) thereby causing melting of the material of the first and/or second pipe (1, 7) in the vicinity of said hole (3) so effecting a fused joint between the first and second pipes (1, 7).

2. A method according to claim 1, characterised in that the electrically conducting element(s) are selected to have a Curie point within the range of fusion temperature which is applicable for the pipes being joined together.

3. A method according to claim 2 characterised in that the Curie point of the conductive material of the element(s) lies in the range from 200 to 300°C.

4. A method according to claim 2 or claim 3 characterised in that the pipes to be joined together are made of polyethylene and the Curie point of the conductive material is in the range of from 230 to 280°C.

5. A method according to claim 4 characterised in that the Curie point of the conductive material lies in the range 250 to 270°C.

6. A method according to claim 1 characterised in that the pipes to be joined together are made of polypropylene and the Curie point of the conductive material lies in the range 250 to 300°C.

7. A method according to claim 6 characterised in that the Curie point of the conductive material lies in the range of from 260 to 290°C.

8. A method according to any of the preceding claims characterised in that said electrically conducting element(s) are in the form of one or more perforated strips of metal.

9. A method according to any of the preceding claims characterised in that the electrically conducting element(s) include a metal ring coated with polymeric material chosen so as to be capable of effecting a good bond to both the ring and the material of one of both pipes to be joined together.

### Revendications

1. Procédé pour constituer un raccord latéral entre une première conduite thermoplastique (1) et une seconde conduite thermoplastique (7), consistant à introduire l'extrémité (5) de la seconde conduite (7) dans un trou (3) formé dans la première conduite (1), ladite extrémité (5) de la seconde conduite (7) portant ou incorporant un ou des éléments électriquement conducteurs (11), la seconde conduite (7) étant pourvue d'un moyen (15) pour induire un courant dans le ou lesdits éléments électriquement conducteurs (11), le courant étant tel qu'il chauffe le ou les éléments (11), ce qui permet de faire fondre le matériau de la première et/ou de la seconde conduite (1, 7) au voisinage dudit trou (3) en réalisant ainsi un joint fondu entre la première et la seconde conduite (1, 7).

2. Procédé selon la revendication 1, caractérisé en ce que le ou lesdits éléments électriquement conducteurs (11) sont choisis pour avoir un point de Curie compris dans l'intervalle de température de fusion qui est applicable aux conduites jointes entre elles.

3. Procédé selon la revendication 2, caractérisé en ce que le point de Curie du matériau conducteur du ou des éléments se trouve dans l'intervalle de 200 à 300°C.

4. Procédé selon l'une quelconque des revendications 2 et 3, caractérisé en ce que les conduites à joindre entre elles sont en polyéthylène et en ce que le point de Curie du matériau conducteur est compris dans l'intervalle de 230 à 280°C.

5. Procédé selon la revendication 4, caractérisé en ce que le point de Curie du matériau conducteur se trouve dans l'intervalle de 250 à 270°C.

6. Procédé selon la revendication 1, caractérisé en ce que les conduites à joindre entre elles sont en polypropylène et en ce que le point de Curie du matériau conducteur se trouve dans l'intervalle de 250 à 300°C.

7. Procédé selon la revendication 6, caractérisé en ce que le point de Curie du matériau conducteur se trouve dans l'intervalle de 260 à 290°C.

8. Procédé selon l'une quelconque des revendications précédentes, caractérisé en ce que le ou lesdits éléments électriquement conducteurs ont la forme d'une ou de plusieurs bandes métalliques perforées.

9. Procédé selon l'une quelconque des revendications précédentes, caractérisé en ce que le ou les éléments électriquement conducteurs comprennent un anneau métallique recouvert d'un matériau polymérique choisi de manière à ce qu'il puisse former un bon joint à la fois pour l'anneau et le matériau d'une des deux conduites à joindre entre elles.

### Patentansprüche

1. Ein Verfahren zum Herstellen einer seitlichen Verbindung zwischen einem ersten thermoplastischen Rohr (1) und einem zweiten thermoplastischen Rohr (7), bei dem man das Ende (5) des zweiten Rohres (7) in eine Öffnung (3) im ersten Rohr (1) einführt, wobei das Ende (5) des zweiten Rohres (7) ein elektrisch leitendes Element oder Elemente (11) trägt oder enthält, bei dem das zweite Rohr (7) mit einer Einrichtung (15) zum Induzieren von Strom in dem elektrisch leitenden Element oder den Elementen (11) ausgerüstet ist, wobei der Strom derart ist, daß das Element oder die Elemente (11) erhitzt werden, wodurch ein Schmelzen des Werkstoffes des ersten und/oder zweiten Rohres (1, 7) im Bereich der Öffnung (3) verursacht wird, was eine Schmelzverbindung zwischen dem ersten und dem zweiten Rohr (1, 7) bewirkt.

2. Ein Verfahren nach Anspruch 1, dadurch gekennzeichnet, daß das elektrisch leitende Element oder die Elemente so ausgewählt sind, daß sie einen Curiepunkt im Bereich der Schmelztemperatur, die für die miteinander zu verbindenden Rohre geeignet ist, besitzt.

3. Ein Verfahren nach Anspruch 2, dadurch gekennzeichnet, daß der Curiepunkt des leitenden Werkstoffes des Elementes oder der Elemente im Bereich von 200 bis 300°C liegt.

4. Ein Verfahren nach Anspruch 2 oder Anspruch 3, dadurch gekennzeichnet, daß die miteinander zu verbindenden Rohre aus Polyäthylen hergestellt sind und daß der Curiepunkt des leitenden Werkstoffes im Bereich von 230 bis 280°C ist.

5. Ein Verfahren nach Anspruch 4, dadurch gekennzeichnet, daß der Curiepunkt des leitenden Werkstoffes im Bereich von 250 bis 270°C liegt.

6. Ein Verfahren nach Anspruch 1, dadurch gekennzeichnet, daß die miteinander zu verbindenden Rohre aus Polypropylen hergestellt sind und daß der Curiepunkt des leitfähigen Werkstoffes im Bereich 250 bis 300°C liegt.

7. Ein Verfahren nach Anspruch 6, dadurch gekennzeichnet, daß der Curiepunkt des leitfähigen Werkstoffes im Bereich von 260 bis 290°C liegt.

8. Ein Verfahren nach einem der vorhergehenden Ansprüche, dadurch gekennzeichnet, daß das elektrisch leitende Element oder die Elemente als ein oder mehrere perforierte Metallstreifen ausgebildet sind.

9. Ein Verfahren nach einem der vorhergehenden Ansprüche, dadurch gekennzeichnet, daß das elektrisch leitende Element oder die Elemente einen Metallring aufweisen, der mit einem Polymerwerkstoff beschichtet ist, der so ausgewählt ist, daß er eine gute Bindung sowohl zum Ring als auch zum Werkstoff von einem der beiden miteinander zu verbindenden Rohre zu bewirken befähigt ist.

1